# EUROPEAN PATENT APPLICATION

(11) **EP 3 760 083 A1**
(43) Date of publication of application: **06.01.2021**
(21) Application number: 19216117.2
(22) Date of filing: 13.12.2019
(51) Int. Cl.: A47J 31/00, A47J 31/44, A47J 31/46

(54) **BEVERAGE MAKER HEATED FLUID FEEDBACK CONTROL SYSTEM**

(30) Priority: 02.07.2019 US 201916460481
(71) Applicant: B/E Aerospace, Inc., Winston Salem, NC 27105 (US)
(72) Inventor: DEVLIN, Byron A., Parkville, MO 64152 (US); SERFLING, Anthony D., Kansas City, MO 64108 (US)
(74) Representative: Dehns

(57) **Abstract**

A system and method. The system may include a beverage machine including a pump (110), a heater (112), a sensor (114), and a processor (106). The pump (110) may be configured to pump fluid including gas or liquid. The heater (112) may be configured to heat the fluid. The sensor (114) may be implemented downstream of the pump (110) and the heater (112). The sensor (114) may be configured to sense a pressure, a flow rate, a steam quality, or a temperature of the heated fluid and to output sensor data including information of the pressure, the flow rate, the steam quality, or the temperature of the heated fluid. The processor (106) may be communicatively coupled to the heater (112), the pump (110), and the sensor (114). The processor (106) may be configured to: receive the sensor (114) data; control operation of the pump (110) or the heater (112); and based on the sensor data, adjust an operational parameter of the pump (110) or the heater (112).

## Description

### BACKGROUND

Milk frothing involves a precise control over steam and milk temperature in order to produce satisfactory milk froth without scorching the milk. The current method of producing steam for frothing is to heat a thermal mass using a cartridge heater to a predetermined setpoint, and pumping water through the thermal mass at a predetermined flow rate. The temperature setpoint and flow rate of the water in the heater are both fixed values in software.

As the operating environment of the espresso maker changes, and as the unit ages, many factors can alter the performance of the froth system. Varying atmospheric pressures will create different pressures within the froth system, scale buildup will decrease the heat transfer rate of the thermal mass to the water to create steam, the efficiency of the heater may change as it ages, and water quality will vary from airline to airline.

### SUMMARY

In one aspect, embodiments of the inventive concepts disclosed herein are directed to a system. The system may include a beverage machine including a pump, heater, a sensor, and a processor. The pump may be configured to pump fluid including gas or liquid. The heater may be configured to heat the fluid. The sensor may be implemented downstream of the pump and the heater. The sensor may be configured to sense a pressure, a flow rate, a steam quality, or a temperature of the heated fluid and to output sensor data including information of the pressure, the flow rate, the steam quality, or the temperature of the heated fluid. The processor may be communicatively coupled to the heater, the pump, and the sensor. The processor may be configured to: receive the sensor data; control operation of the pump or the heater; and based on the sensor data, adjust an operational parameter of the pump or the heater.

In a further aspect, embodiments of the inventive concepts disclosed herein are directed to a method. The method may include pumping fluid, by a pump, comprising gas or liquid. The method may also include heating, by a heater, the fluid. The method may include sensing, by a sensor implemented downstream of the pump and the heater, a pressure, a flow rate, a steam quality, or a temperature of the heated fluid. The method may also include outputting the sensor data including information of the pressure, the flow rate, the steam quality, or the temperature of the heated fluid. The method may include receiving the sensor data. The method may also include controlling operation of the pump or the heater. The method may include, based on the sensor data, adjusting an operational parameter of the pump or the heater.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system including an aircraft including a beverage machine according to the inventive concepts disclosed herein.
FIG. 2 is a diagram of an exemplary embodiment of a method according to the inventive concepts disclosed herein.
FIG. 3 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system, method, and beverage maker including a processor and at least one sensor downstream of a heated fluid, wherein the processor is configured to receive sensor data, control operation of at least one of a pump or a heater, and adjust an operational parameter of at least one of the pump or the heater. In some embodiments, in order to create better froth quality, a feedback control system may be implemented in the froth system of the beverage maker. Such feedback control system may compensate for various factors that can decrease the performance of the froth system. For example, the feedback control system may compensate for varying atmospheric pressures that can create different pressures within the froth system, scale buildup that can decrease the heat transfer rate of the thermal mass to the water to create steam, the efficiency of the heater that can change as the heater ages, and water quality that can vary from airline to airline. In some embodiments, the beverage maker froth system may be controlled by a processor and activated by a user for either frothing a decanter of milk or frothing milk for a cappuccino beverage.

In some embodiments, at least one sensor (e.g., a temperature sensor (e.g., a resistance temperature detector (RTD)), a pressure sensor, a steam quality sensor, and/or a flow rate sensor) may be placed in the steam flow path downstream of the heater to monitor output steam temperatures. Sensor data may then be fed back to the processor. The processor may then adjust pump duty cycle to either increase or decrease the water flow rate throughout a froth cycle, to raise or lower the steam temperature. The processor may also adjust the heater control logic, or alter the temperature set point to produce higher or lower temperature steam at the beginning of the froth cycle, and maintain temperature throughout the cycle.

In some embodiments, in addition to controlling the steam output of the froth cycle, the sensor data may be used to monitor the health of the froth system while it is operating. Utilization of the sensor data may allow for health monitoring of the froth system, which can be a major reliability issue for beverage makers. For example, the data from the RTD could be stored in memory and referenced during each use to monitor degradation of the unit due to scale or component failure within the froth system. When integrated with unit connectivity, the data may be used to alert an airline or repair station of when the froth system is under performing or has experienced some other type of failure. This alert may be used as an indicator for preventative maintenance to be completed, such as descaling the unit. The results of the data feedback monitoring may improve service life, provide more precise preventative maintenance schedules for each airline, and improve froth quality throughout the life of the unit, and in some embodiments, may be achieved by only adding an additional RTD to the froth system. The processor of the beverage maker may be configured to communicate with a display or another computing device to provide alerts for maintenance or removal of the unit for a froth system failure or scale buildup. The sensor data feedback control may improve milk froth quality over the life of the unit. Implementing the sensor data feedback control may be low cost and may be integrated into existing beverage machines. The sensor data feedback control may also allow the processor to monitor the performance of the beverage machine over the beverage machine's lifetime to indicate when a heater, pump, or other component may be near failure or has failed.

In some embodiments, the at least one sensor may include a pressure sensor to improve the control logic of the froth system.

The beverage maker may also utilize user inputs to alter the desired froth temperature for even more refined froth performance. In some embodiments, the beverage machine may include a display (e.g., a touchscreen display) for user inputs or alerts, and warnings may be displayed on the display to request preventative maintenance or indicate component failure.

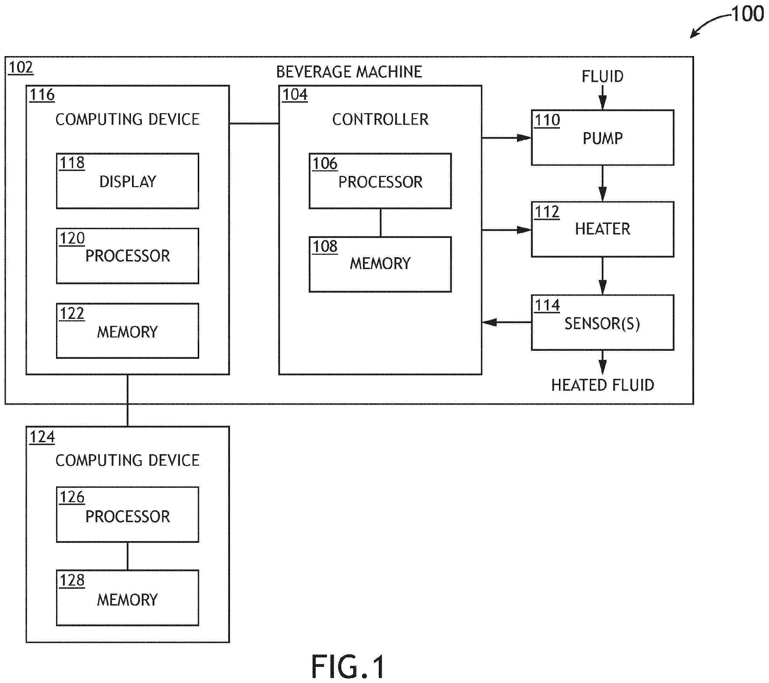

Referring now to FIG. 1, an exemplary embodiment of a system (e.g., a vehicular system (e.g., an aircraft system)) implemented in a vehicle (e.g., an aircraft 100) according to the inventive concepts disclosed herein is depicted. The system may include a beverage machine 102 and a computing device 124, which may be communicatively coupled at any given time. While FIG. 1 exemplarily depicts the beverage machine 102 and the computing device 124 implemented on the aircraft 100, some embodiments may be implemented as any suitable vehicular system (e.g., an automobile system, a train system, and/or a ship system) implemented in any suitable vehicle (e.g., an automobile, a train, and/or a ship).

The beverage machine 102 may be implemented as a hot beverage machine, such as an espresso machine, a cappuccino machine, and/or a coffee maker. For example, the beverage machine 102 may be implemented as an espresso machine and/or a cappuccino machine with a frothing system configured to combine steam and milk to form froth. The beverage machine 102 may include at least one controller 104, at least one pump 110, at least one heater 112, at least one sensor 114, and at least one computing device 116, some or all of which may be communicatively coupled at any given time.

The pump 110 may be configured to pump fluid comprising at least one of gas or liquid to the heater 112. For example, the fluid may be water and/or steam. Operational parameters and/or control logic of the pump 110 may be controlled (e.g., adjusted, such as increasing or decreasing flow rates) by the controller 104, for example, based on sensor data from the at least one sensor 114.

The heater 112 may be configured to heat the fluid to produce a heated fluid, such as heated water and/or steam. The heater 112 may be in fluid communication with the pump 110 and may be connected to the pump 110. The heated fluid may pass out of the heater 112 through a tube including at least one sensor 114. Operational parameters and/or control logic of the heater 112 may be controlled (e.g., adjusted, such as increasing or decreasing temperature setpoints) by the controller 104, for example, based on sensor data from the at least one sensor 114.

The at least one sensor 114 may be implemented downstream of the heater 112 and the pump 110. The at least one sensor 114 may be implemented as any suitable sensor(s), such as a temperature sensor (e.g., an RTD), a pressure sensor, and/or a flowrate sensor. The at least one sensor 114 may be configured to sense at least one of a pressure, a flow rate, or a temperature of the heated fluid and to output sensor data including information of the at least one of the pressure, the flow rate, or the temperature of the heated fluid to the controller 104. Once the heated fluid passes by the at least one sensor 114, the heated fluid may pass to a brew module of the beverage machine 102 or may be combined with milk in a frother of the beverage machine 102.

The controller 104 may be implemented as any suitable computing device and/or controller, such as a cascade controller, a feedforward controller, or a feedback logic controller. The controller 104 may include at least one processor 106, memory 108, and/or at least one storage device, as well as other components, equipment, and/or devices commonly included in a computing device, some or all of which may be communicatively coupled at any given time. The processor 106 may be implemented as any suitable processor, such as a microprocessor, a general-purpose processor, and/or a field-programmable gate array (FPGA). The processor 106 may be configured to run various software applications or computer code stored (e.g., maintained) in a non-transitory computer-readable medium (e.g., memory 108 and/or the at least one storage device) and configured to execute various instructions or operations, as disclosed throughout. For example, the processor 106 may be configured to perform any or all of the operations of the controller 104. Additionally, for example, the controller 104 and/or the processor 106 may be implemented as special purpose computers or special purpose processors configured (e.g., programmed) to execute instructions for performing any or all of the operations disclosed throughout.

The processor 106 may be configured to receive the sensor data, control operation of at least one of the pump or the heater, and, based on the sensor data, adjust an operational parameter of at least one of the pump or the heater. For example, the processor 106 may be configured to increase or decrease a heater setpoint and increase or decrease a pump flow rate. Additionally, the processor 106 may be configured to compare current sensor data with previous sensor data to calculate a sensor trend(s) (e.g., temperature and pressure trends). The processor 106 may be configured to determine whether sensor data is above maximum or minimum safety thresholds and/or setpoint thresholds. Additionally, the processor 106 may be configured to update heater and/or pump control logic. Further, the processor 106 may be configured to store temperature and/or pressure trend data in the memory 108. Additionally, the processor 106 may be configured to abort a beverage machine function, such as a froth function. The processor 106 may be configured to activate an overtemperature safety relay, output a maintenance required alert, and/or output a descale required alert.

The computing device 116 may be implemented as any suitable computing device and/or controller. The computing device 116 may include at least one display 118 (e.g., a touchscreen display), at least one processor 120, memory 122, and/or at least one storage device, as well as other components, equipment, and/or devices commonly included in a computing device, some or all of which may be communicatively coupled at any given time. The processor 120 may be implemented as any suitable processor, such as a microprocessor, a general-purpose processor, and/or a field-programmable gate array (FPGA). The processor 120 may be configured to run various software applications or computer code stored (e.g., maintained) in a non-transitory computer-readable medium (e.g., memory 108 and/or the at least one storage device) and configured to execute various instructions or operations, as disclosed throughout. For example, the processor 120 may be configured to perform any or all of the operations of the computing device 116. Additionally, for example, the computing device 116 and/or the processor 120 may be implemented as special purpose computers or special purpose processors configured (e.g., programmed) to execute instructions for performing any or all of the operations disclosed throughout. In some embodiments, the computing device 116 and the controller 104 may be implemented as a single computing device.

For example, the processor 120 may be configured to receive a maintenance required alert and/or a descale required alert and output graphical data to the display 118 to display the maintenance required alert and/or descale required alert to a user.

In some embodiments, the system may include the computing device 124. The computing device 124 may be implemented as any suitable computing device and/or controller. The computing device 124 may include at least one display (e.g., a touchscreen display), at least one processor 126, memory 128, and/or at least one storage device, as well as other components, equipment, and/or devices commonly included in a computing device, some or all of which may be communicatively coupled at any given time. The processor 126 may be implemented as any suitable processor, such as a microprocessor, a general-purpose processor, and/or a field-programmable gate array (FPGA). The processor 126 may be configured to run various software applications or computer code stored (e.g., maintained) in a non-transitory computer-readable medium (e.g., memory 108 and/or the at least one storage device) and configured to execute various instructions or operations, as disclosed throughout. For example, the processor 126 may be configured to perform any or all of the operations of the computing device 124. Additionally, for example, the computing device 124 and/or the processor 126 may be implemented as special purpose computers or special purpose processors configured (e.g., programmed) to execute instructions for performing any or all of the operations disclosed throughout. For example, the computing device 124 may be configured to receive a maintenance required alert and/or a descale required alert from the beverage machine 102 and/or output graphical data to a display to display the maintenance required alert and/or descale required alert to a user.

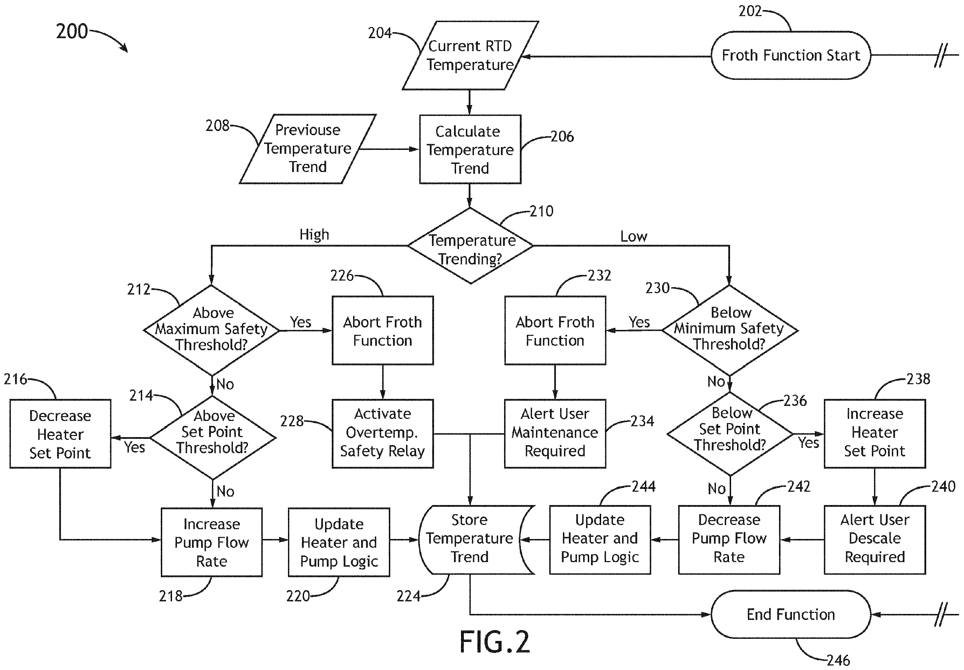

Referring now to FIGS. 2-3, exemplary embodiments of methods 200 and 300 according to the inventive concepts disclosed herein may include one or more steps. The steps may be performed by the controller 104 and/or the processor 106. For example, the processor 106 may be configured to receive the sensor data, control operation of at least one of the pump or the heater, and, based on the sensor data, adjust an operational parameter of at least one of the pump or the heater. Additionally, for example, some embodiments may include performing one more instances of the methods 200 and 300 iteratively, concurrently, and/or sequentially.

Referring now to FIG. 2, an exemplary embodiment of a method 200 according to the inventive concepts disclosed herein may include one or more of the following steps. Additionally, for example, some embodiments may include performing one more instances of the method 200 iteratively, concurrently, and/or sequentially.

A step 202 may include starting a froth function.

A step 204 may include receiving current temperature sensor (e.g., RTD) data.

A step 208 may include accessing previous temperature trend data.

A step 206 may include calculating a temperature trend based on the information of the temperature of the heated fluid and previous information of the temperature of the heated fluid.

A step 210 may include determining whether the temperature is trending high or low.

A step 212 may include, if the temperature is trending high, determining whether the temperature trend is above or below a maximum safety threshold.

A step 214 may include, if the temperature trend is below a maximum threshold, determining whether the temperature trend is above or below a setpoint threshold.

A step 216 may include, if the temperature trend is above the setpoint threshold, decreasing the heater setpoint.

A step 218 may include increasing a pump flow rate.

A step 220 may include updating heater and pump control logic.

A step 224 may include storing the temperature trend and proceeding to step 246.

A step 226 may include, if the temperature trend is above a maximum safety threshold, aborting the froth function.

A step 228 may include activating an overtemperature safety relay and proceeding to step 224.

A step 230 may include, if the temperature is trending low, determining whether the temperature trend is above or below a minimum threshold.

A step 232 may include, if the temperature trend is below a minimum threshold, aborting the froth function.

A step 234 may include outputting a maintenance required alert and proceeding to step 224.

A step 236 may include, if the temperature trend is above a minimum threshold, determining whether the temperature trend is below a setpoint threshold.

A step 238 may include, if the temperature trend is below a setpoint threshold, increasing a heater setpoint.

A step 240 may include outputting a descale required alert.

A step 242 may include decreasing a flow rate.

A step 244 may include updating heater and pump control logic and proceeding to step 224.

A step 246 may include ending the froth function cycle.

Further, the method 200 may include any of the operations disclosed throughout.

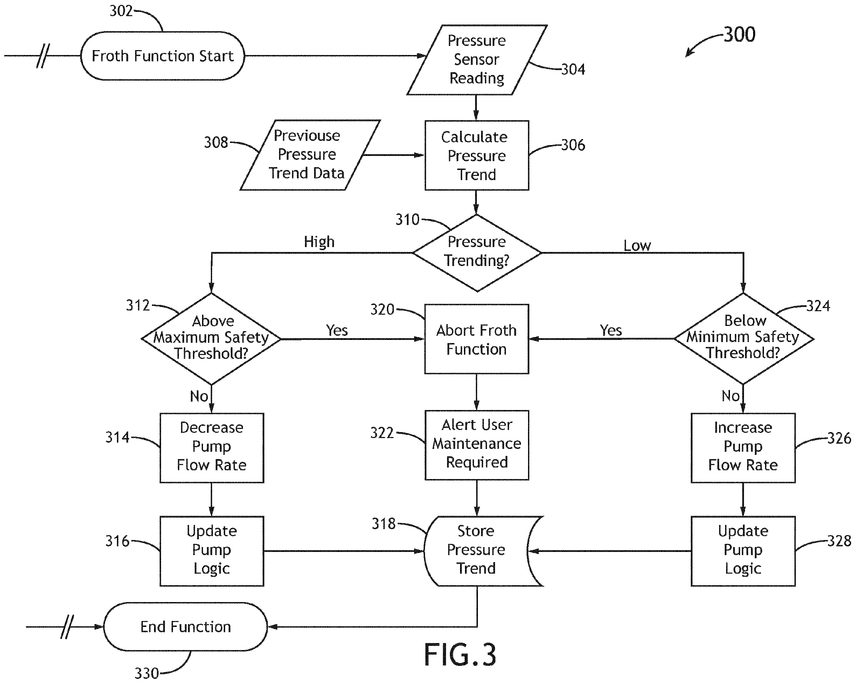

Referring now to FIG. 3, an exemplary embodiment of a method 300 according to the inventive concepts disclosed herein may include one or more of the following steps. Additionally, for example, some embodiments may include performing one more instances of the method 300 iteratively, concurrently, and/or sequentially.

A step 302 may include starting a froth function.

A step 304 may include receiving current pressure sensor data.

A step 308 may include accessing previous pressure trend data.

A step 306 may include calculating a pressure trend based on the information of the pressure of the heated fluid and previous information of the pressure of the heated fluid.

A step 310 may include determining whether the pressure is trending high or low.

A step 312 may include, if the pressure is trending high, determining whether the pressure trend is above or below a maximum safety threshold.

A step 314 may include, if the temperature trend is below a maximum threshold, decreasing a pump flow rate.

A step 316 may include updating pump control logic.

A step 318 may include storing the pressure trend and proceeding to step 330.

A step 320 may include, if the temperature trend is above a maximum safety threshold, aborting the froth function.

A step 322 may include outputting a maintenance required alert and proceeding to step 318.

A step 324 may include, if the pressure is trending low, determining whether the pressure trend is above or below a minimum threshold.

A step 326 may include, if the temperature trend is above a minimum threshold, increasing a pump flow rate.

A step 328 may include updating pump control logic and proceeding to step 318.

A step 330 may include ending the froth cycle function.

Further, the method 300 may include any of the operations disclosed throughout.

As will be appreciated from the above, embodiments of the inventive concepts disclosed herein may be directed to system, method, and beverage maker including a processor and at least one sensor downstream of a heated fluid, wherein the processor is configured to receive sensor data, control operation of at least one of a pump or a heater, and adjust an operational parameter of at least one of the pump or the heater.

As used throughout and as would be appreciated by those skilled in the art, "at least one non-transitory computer-readable medium" may refer to as at least one non-transitory computer-readable medium (e.g., memory 108, memory 122, memory 128, or a combination thereof; e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts defined by the claims. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the claims.

## Claims

1. A system, comprising:
a beverage machine, comprising:
a pump (110) configured to pump fluid comprising at least one of gas or liquid;
a heater (112) configured to heat the fluid;
at least one sensor (114) implemented downstream of the pump and the heater, the at least one sensor configured to sense at least one of a pressure, a flow rate, a steam quality, or a temperature of the heated fluid and to output sensor data including information of the at least one of the pressure, the flow rate, the steam quality, or the temperature of the heated fluid; and
a processor (106) communicatively coupled to the heater, the pump, and the at least one sensor, the processor configured to:
receive the sensor data;
control operation of at least one of the pump or the heater; and
based on the sensor data, adjust at least one operational parameter of at least one of the pump or the heater.

2. The system of claim 1, wherein the heated fluid comprises steam, wherein the beverage machine is configured to combine the steam with milk to form froth, wherein the beverage machine is at least one of an espresso machine or a cappuccino machine.

3. The system of claim 1 or 2, wherein the beverage machine is a coffee maker, wherein the heated fluid comprises heated water.

4. The system of any preceding claim, wherein the at least one sensor comprises a temperature sensor and a pressure sensor, wherein the sensor data includes information of the pressure and the temperature of the heated fluid.

5. The system of any preceding claim, wherein the processor is further configured to control operation of the pump and the heater and to adjust operational parameters of the pump and the heater based on the sensor data.

6. The system of any preceding claim, wherein the at least one sensor comprises a temperature sensor, wherein the sensor data includes information of the temperature of the heated fluid, wherein the processor is further configured to calculate a temperature trend based on the information of the temperature of the heated fluid and previous information of the temperature of the heated fluid.

7. The system of claim 6, wherein the processor is further configured to: determine that the temperature trend is above a maximum safety threshold; abort a froth function; and activate an overtemperature safety relay; and/or wherein the processor is further configured to: determine that the temperature trend is below a maximum safety threshold and above a setpoint threshold; decrease a heater setpoint; and increase a pump flow rate; and/or wherein the processor is further configured to: determine that the temperature trend is below a maximum safety threshold and below a setpoint threshold; and increase a pump flow rate; and/or wherein the processor is further configured to: determine that the temperature trend is below a minimum threshold; abort a froth function; and output a maintenance required alert; and/or wherein the processor is further configured to: determine that the temperature trend is above a minimum threshold and below a setpoint threshold; increase a heater setpoint; output a descale required alert; and decrease a pump flow rate; and/or wherein the processor is further configured to: determine that the temperature trend is above a minimum threshold and above a setpoint threshold; and decrease a pump flow rate.

8. The system of any preceding claim, wherein the at least one sensor comprises a pressure sensor, wherein the sensor data includes information of the pressure of the heated fluid, wherein the processor is further configured to calculate a pressure trend based on the information of the pressure of the heated fluid and previous information of the pressure of the heated fluid.

9. The system of claim 8, wherein the processor is further configured to: determine that the pressure trend is above a maximum safety threshold; abort a froth function; and output a maintenance required alert; and/or wherein the processor is further configured to: determine that the pressure trend is below a maximum safety threshold; and decrease a pump flow rate; and/or wherein the processor is further configured to: determine that the pressure trend is below a minimum threshold; abort a froth function; and output a maintenance required alert; and/or wherein the processor is further configured to: determine that the pressure trend is above a minimum threshold; and increase a pump flow rate.

10. The system of any preceding claim, further comprising a computing device communicatively coupled to the beverage machine, the computing device configured to receive at least one of: a maintenance required alert or a descale required alert.

11. The system of any preceding claim, wherein the beverage machine further comprises a display, wherein the display is configured to display at least one of: a maintenance required alert or a descale required alert.

12. A method, comprising:
pumping, by a pump, fluid comprising at least one of gas or liquid;
heating, by a heater, the fluid;
sensing, by at least one sensor implemented downstream of the pump and the heater, at least one of a pressure, a flow rate, a steam quality, or a temperature of the heated fluid;
outputting the sensor data including information of the at least one of the pressure, the flow rate, the steam quality, or the temperature of the heated fluid;
receiving the sensor data;
controlling operation of at least one of the pump or the heater; and
based on the sensor data, adjusting at least one operational parameter of at least one of the pump or the heater.
